# EUROPEAN PATENT APPLICATION

(11) **EP 4 064 761 A1**
(43) Date of publication of application: **28.09.2022**
(21) Application number: 19958397.2
(22) Date of filing: 30.12.2019
(51) Int. Cl.: H04W 48/16

(54) **ROAMING METHOD, APPARATUS AND SYSTEM**

(71) Applicant: Huawei Technologies Co., Ltd., Shenzhen, Guangdong 518129 (CN)
(72) Inventor: ZHU, fangyuan, Shenzhen, Guangdong 518129 (CN); LI, Yan, Shenzhen, Guangdong 518129 (CN); LIU, Jianning, Shenzhen, Guangdong 518129 (CN)
(74) Representative: Thun, Clemens
(86) International application number: PCT/CN2019/129816
(87) International publication number: WO 2021/134167

(57) **Abstract**

Embodiments of this application provide a roaming method, an apparatus, and a system. The method includes: A terminal device obtains information about a first PLMN, where a dynamic roaming agreement exists between the first PLMN and a second PLMN. If the terminal device cannot access the second PLMN, the terminal device sends an access request to the first PLMN based on the information about the first PLMN. The dynamic roaming agreement exists between the first PLMN and the second PLMN, so that after the HPLMN is faulty, time for the terminal device to wait for service recovery can be shortened.

## Description

### TECHNICAL FIELD

Embodiments of this application relate to the field of communication technologies, and in particular, to a roaming method, an apparatus, and a system.

### BACKGROUND

In an existing communication network, when a fault occurs in a home public land mobile network (Home Public Land Mobile Network, HPLMN) corresponding to a terminal device, the terminal device cannot access the HPLMN. Generally, there may be other carrier networks in an area in which a fault occurs in the HPLMN. However, no roaming agreement may be signed between these carrier networks and the HPLMN. Therefore, the terminal device can access another carrier network only after the fault of the HPLMN is rectified, resulting in long service waiting time of the terminal device.

### SUMMARY

Embodiments of this application provide a roaming method, an apparatus, and a system, so that when an HPLMN corresponding to a terminal device is faulty, time for the terminal device to wait for service recovery can be shortened.

According to a first aspect, an embodiment of this application provides a roaming method. The method includes: A terminal device obtains information about a first PLMN, where a dynamic roaming agreement exists between the first PLMN and a second PLMN. If the terminal device cannot access the second PLMN, the terminal device sends an access request to the first PLMN based on the information about the first PLMN

In embodiments of this application, the dynamic roaming agreement exists between the first PLMN and the second PLMN, so that after the HPLMN is faulty, time for the terminal device to wait for service recovery can be shortened.

In a possible implementation, that a terminal device obtains information about a first PLMN includes: The terminal device receives the information about the first PLMN from a core network element in the second PLMN in a process in which the terminal device registers with the second PLMN

In a possible implementation, that a terminal device obtains information about a first PLMN includes: The terminal device sends a registration request to a core network element in the first PLMN. The terminal device receives a registration reject message from the core network element. The terminal device obtains the information about the first PLMN based on the registration reject message.

In a possible implementation, the registration reject message includes the information about the first PLMN, and/or the registration reject message includes information indicating that the dynamic roaming agreement between the first PLMN and the second PLMN is not activated.

In a possible implementation, that the terminal device sends an access request to the first PLMN based on the information about the first PLMN includes: If the terminal device can access no PLMN whose priority is higher than that of the first PLMN, the terminal device sends the access request to the first PLMN

In a possible implementation, the method further includes: The terminal device receives a notification message from the first PLMN, where the notification message is used to notify the terminal device that the dynamic roaming agreement between the first PLMN and the second PLMN is activated, and the notification message includes the information about the first PLMN. That the terminal device sends an access request to the first PLMN based on the information about the first PLMN includes: The terminal device sends the access request to the first PLMN based on the notification message.

In a possible implementation, the method further includes: If the terminal device cannot access the first PLMN, the terminal device does not add the first PLMN to an access-forbidden PLMN list.

In a possible implementation, the information about the first PLMN includes identity information about the first PLMN

In a possible implementation, the information about the first PLMN further includes at least one of the following information: a type of an access technology for allowing the terminal device to access the first PLMN, area information for allowing the terminal device to access the first PLMN, a condition for accessing the first PLMN by the terminal device, or priority information about the first PLMN

In a possible implementation, the priority information about the first PLMN includes that a priority of the first PLMN is lower than a priority of any one of the following PLMNs: a priority of the second PLMN, a priority of an equivalent PLMN of the second PLMN, a priority of a user controlled PLMN, or a priority of an operator controlled PLMN

In a possible implementation, the priority information about the first PLMN includes: The priority of the first PLMN is higher than a priority of a PLMN selected by a user based on a quality of service requirement, or the priority of the first PLMN is lower than a priority of an operator controlled PLMN and higher than a priority of a PLMN selected by a user based on a quality of service requirement.

In a possible implementation, the condition for accessing the first PLMN by the terminal device includes: The terminal device receives indication information that is sent by the first PLMN and that is used to indicate that the dynamic roaming agreement between the first PLMN and the second PLMN is activated, and/or the terminal device can access no PLMN whose priority is higher than that of the first PLMN

In a possible implementation, the terminal device stores the information about the first PLMN into a PLMN selection list of the terminal device.

According to a second aspect, an embodiment of this application provides a communication method. The method includes: An access management network element in a second PLMN receives a registration request message from a terminal device. The access management network element sends a registration accept message to the terminal device, where the registration accept message includes information about a first PLMN, and a dynamic roaming agreement exists between the first PLMN and the second PLMN

In a possible implementation, the information about the first PLMN includes identity information about the first PLMN

In a possible implementation, the information about the first PLMN further includes at least one of the following information: a type of an access technology for allowing the terminal device to access the first PLMN, area information for allowing the terminal device to access the first PLMN, a condition for accessing the first PLMN by the terminal device, or priority information about the first PLMN. For details, refer to the descriptions about the information about the first PLMN in the first aspect.

In a possible implementation, the access management network element obtains subscription data of the terminal device from a unified data management network element. The subscription data includes the information about the first PLMN

According to a third aspect, an embodiment of this application provides a communication apparatus. The apparatus includes: a processing unit, configured to obtain information about a first public land mobile network PLMN, where a dynamic roaming agreement exists between the first PLMN and a second PLMN, and further configured to determine that the communication apparatus cannot access the second PLMN, and a sending unit, configured to send an access request to the first PLMN based on the information about the first PLMN

In a possible implementation, the communication apparatus may be a terminal device.

According to a fourth aspect, an embodiment of this application provides a communication apparatus. The apparatus includes: a receiving unit, configured to receive a registration request message from a terminal device, and a sending unit, configured to send a registration accept message to the terminal device. The registration accept message includes information about a first PLMN, and a dynamic roaming agreement exists between the first PLMN and a second PLMN to which the communication apparatus belongs.

In a possible implementation, the communication apparatus may be an access management network element.

In embodiments of this application, for example, the first PLMN and the second PLMN have a same mobile country code. A mobile network code of the first PLMN is different from a mobile network code of the second PLMN

In embodiments of this application, for example, that a dynamic roaming agreement exists between the first PLMN and a second PLMN includes: If the terminal device can access the second PLMN, the roaming agreement between the first PLMN and the second PLMN is deactivated. If the terminal device cannot access the second PLMN, the roaming agreement between the first PLMN and the second PLMN is activated.

In embodiments of this application, for example, the first PLMN is a visited public land mobile network VPLMN, and the second PLMN is a home public land mobile network HPLMN

According to a fifth aspect, this application provides a communication apparatus, including a processor. The processor reads computer-readable instructions stored in a memory, to enable the communication apparatus to perform the method in any one of the first aspect or the possible implementations of the first aspect.

According to a sixth aspect, this application provides a communication apparatus, including a processor. The processor reads computer-readable instructions stored in a memory, to enable the communication apparatus to perform the method in any one of the second aspect or the possible implementations of the second aspect.

According to a seventh aspect, this application provides a communication system. The communication system includes the communication apparatus in the fourth aspect or the sixth aspect and an access network device connected to the communication apparatus. The communication apparatus communicates with a terminal device by using the access network device.

According to an eighth aspect, this application provides a computer-readable storage medium, including computer-readable instructions. When the instructions are run on a computer, the computer is enabled to perform the method in the first aspect or the second aspect.

According to a ninth aspect, this application provides a computer program product, including a computer program. When the program is run on a computer, the computer is enabled to perform the method in the first aspect or the second aspect.

According to a tenth aspect, this application provides a chip or a chip system. The chip or the chip system includes at least one processor and a communication interface. The communication interface is coupled to the at least one processor. The processor is configured to run a computer program or instructions, to perform the method in any one of the first aspect or the possible implementations of the first aspect. The communication interface is configured to communicate with a module other than the chip.

### BRIEF DESCRIPTION OF DRAWINGS

FIG. 1 is a schematic diagram of a scenario to which an embodiment of this application is applicable;
FIG. 2 is a schematic diagram of a 5G network to which an embodiment of this application is applicable;
FIG. 3 is a schematic diagram of a roaming method according to an embodiment of this application;
FIG. 4 is a schematic diagram of another roaming method according to an embodiment of this application;
FIG. 5 is a schematic diagram of still another roaming method according to an embodiment of this application;
FIG. 6 is a schematic diagram of a structure of a communication apparatus according to an embodiment of this application;
FIG. 7 is a schematic diagram of a structure of another communication apparatus according to an embodiment of this application; and
FIG. 8 is a schematic diagram of a structure of a chip or a structure of a chip system according to an embodiment of this application.

### DESCRIPTION OF EMBODIMENTS

To clearly describe technical solutions in embodiments of this application, words such as "first" and "second" are used in embodiments of this application to distinguish similar content. For example, a first PLMN and a second PLMN are merely intended to distinguish different PLMNs, but not to limit a sequential order thereof. A person skilled in the art may understand that the words such as "first" and "second" do not limit a quantity and an execution sequence, and the words such as "first" and "second" do not indicate a definite difference.

It should be noted that, in this application, words such as "example" or "for example" are used to represent giving an example, an illustration, or a description. Any embodiment or design scheme described as "example" or "for example" in this application should not be explained as being more preferred or having more advantages than another embodiment or design solution. Exactly, use of the words such as "example" or "for example" is intended to present a related concept in a specific manner.

A network architecture and a service scenario that are described in this embodiment of this application are intended to describe the technical solutions in this embodiment of this application more clearly, and do not constitute a limitation on the technical solutions provided in this embodiment of this application. A person of ordinary skill in the art may know that, with evolution of the network architecture and emergence of new service scenarios, the technical solutions provided in this embodiment of this application are also applicable to similar technical problems.

In this application, "at least one" means one or more, and "a plurality of" means two or more. A term "and/or" describes an association relationship between associated objects and indicates that three relationships may exist. For example, A and/or B may indicate the following cases: Only A exists, both A and B exist, and only B exists, where A and B may be singular or plural. The character "/" generally represents an "or" relationship between the associated objects. "At least one of the following" or a similar expression thereof indicates any combination of the items, and includes a singular item or any combination of plural items. For example, at least one of a, b, or c may indicate: a, b, c, a and b, a and c, b and c, or a, b, and c, where a, b, and c may be singular or plural.

In a communication network, to obtain a service provided by a network, a terminal device needs to select a PLMN, camp on an appropriate cell, and successfully complete a registration process. Based on an operation mode, PLMN selection may be classified into two manners: an automatic mode and a manual mode.

Automatic mode: The automatic mode is that the terminal device automatically attempts selection from a PLMN with a highest priority based on priority ranks of PLMNs in a PLMN list. If the attempt succeeds, the terminal device selects an appropriate cell in the PLMN to camp on. If selection of a PLMN with a high priority fails, the terminal device attempts to select a PLMN with a secondary priority until the terminal device can successfully register with a specific PLMN

Manual mode: The manual mode is that the terminal device presents a list of currently available PLMNs (for example, presented according to priority ranks) to a user, and the user selects an appropriate PLMN from the list of PLMNs to access.

In the automatic mode, prior information-based PLMN selection and initial PLMN selection may be classified based on whether prior information exists.

The prior information-based PLMN selection means that the terminal device records a PLMN (Registered PLMN, RPLMN) with which the terminal device registers most recently (for example, currently). When powered on next time or returning to a coverage area, the terminal device selects the RPLMN with a highest priority. If the RPLMN is unavailable, the terminal device selects a PLMN using an initial selection method.

The initial PLMN selection is that the terminal device selects a PLMN based on various PLMNs and priorities thereof that are recorded in a universal subscriber identity module (Universal Subscriber Identity Module, USIM) when not having the prior information. In a possible implementation, these PLMNs may be ranked in descending order based on the following priorities: (1) an HPLMN; (2) an equivalent HPLMN (Equivalent HPLMN, EHPLMN); (3) a user controlled PLMN (User Controlled PLMN); (4) an operator controlled PLMN (Operator Controlled PLMN); (5) a PLMN selected based on a quality of service requirement; and (6) another PLMN. The user controlled PLMN means that the user of the terminal device may select a corresponding PLMN based on preference. The operator controlled PLMN means that when producing a SIM, an operator stores a PLMN of another operator that has signed a roaming agreement with the operator in the SIM of the terminal device, and the terminal device may select, based on the stored PLMN, a corresponding PLMN to access. The PLMN selected based on the quality of service requirement may be indication information used to indicate the terminal device to select a corresponding PLMN based on the quality of service requirement, for example, select a network with a reference signal received power (Reference Signal Received Power, RSRP) not less than -110 dBm. If none of the PLMNs in (1) to (5) can be accessed, the terminal device may select another PLMN that can be accessed.

If there are a plurality of optional PLMNs in an area in which the terminal device is located, but a registration attempt of the terminal device on each of the plurality of optional PLMNs fails, these PLMNs are set by the terminal device as PLMNs that are forbidden from being accessed. For example, if the terminal device receives cause information about a PLMN not allowed "PLMN not allowed", the terminal device adds the PLMN to a forbidden PLMN "forbidden PLMN" list in a SIM.

Generally, if a plurality of operators in a same area do not sign a roaming agreement, a terminal device of an operator fails to access a PLMN of another operator that does not sign the roaming agreement, and the terminal device adds the failed PLMN to the forbidden PLMN list. If the terminal device is in an automatic network selection mode, the terminal device shall not attempt to access any PLMN in the forbidden PLMN list subsequently. If the user manually attempts to access the PLMN subsequently and registration succeeds, the terminal device deletes the PLMN from the forbidden PLMN list. In the automatic network selection mode or the manual network selection mode, once the forbidden PLMN list is generated, even if the terminal device is powered off or a SIM card is removed, a PLMN in the forbidden PLMN list is not automatically deleted.

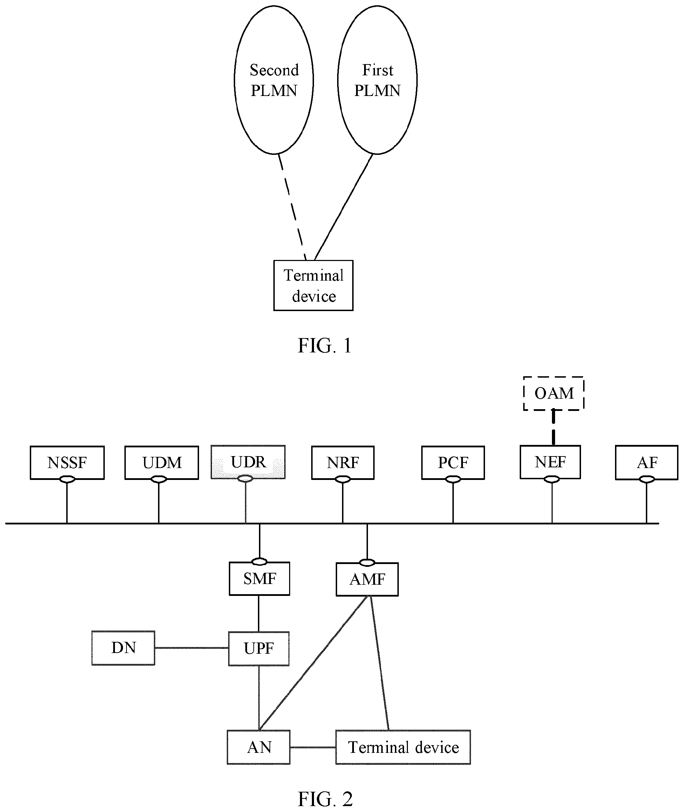

FIG. 1 is a schematic diagram of a scenario to which an embodiment of this application is applicable. When a terminal device cannot access a second PLMN (for example, a fault occurs in the second PLMN), the terminal device may access a first PLMN based on a dynamic roaming agreement between the first PLMN and the second PLMN

In a possible implementation, the second PLMN is an HPLMN, and the first PLMN is a visited public land mobile network (Visited Land Mobile Network, VPLMN).

In a possible implementation, the first PLMN and the second PLMN have a same mobile country code (Mobile Country Code, MCC), and a mobile network code (Mobile Network Code, MNC) of the first PLMN is different from a mobile network code of the second PLMN

In embodiments of this application, that a fault occurs in the PLMN may mean that the fault occurs in an area that is in the PLMN and in which the terminal device is located, and does not necessarily mean that the fault occurs in the entire PLMN

FIG. 2 is a schematic diagram of a 5G network to which an embodiment of this application is applicable. The 5G network in FIG. 2 uses a service-based network architecture. Another 5G network architecture may also be used in embodiments of this application. This is not limited herein.

The 5G network architecture shown in FIG. 2 includes an access network (access network, AN) node and a plurality of network function (network function, NF) network elements. The plurality of NF network elements may include: a user plane function (user plane function, UPF) network element, an access and mobility management function (access and mobility management function, AMF) network element, a session management function (session management function, SMF) network element, a policy control function (policy control function, PCF) network element, a network slice selection function (network slice selection function, NSSF) network element, a unified data management (unified data management, UDM) network element, a network repository function (network repository function, NRF) network element, a network exposure function (network exposure function, NEF) network element, a data storage function network element (unified data repository, UDR), a network management network element, or the like. In addition, the network architecture may further include a terminal device, a data network (data network, DN) node, an application function (application function, AF) network element, or the like.

In embodiments of this application, the network management network element may be an operation administration and maintenance (Operation Administration and Maintenance, OAM) system. The OAM system may communicate with another NF network element by using the NEF network element. Alternatively, the OAM system may directly communicate with another NF network element. This is not limited in embodiments of this application.

Each network element in FIG. 2 may be a network element in a hardware device, may be a software function running on dedicated hardware, or may be a virtualization function instantiated on a platform (for example, a cloud platform).

It should be noted that, in the network architecture shown in FIG. 2, network elements included in the entire network architecture are described as only examples. In embodiments of this application, the network elements included in the network architecture are not limited. For example, in embodiments of this application, the network architecture may include any one or more of all the network elements shown in FIG. 2.

The terminal device is an electronic device having a wireless communication function, and may be deployed on land, including an indoor device, an outdoor device, a handheld device, or a vehicle-mounted device; or may be deployed on a water surface (such as a ship); or may be deployed in air (for example, on aircraft, a balloon, or a satellite). The terminal device may be user equipment (user equipment, UE), a mobile phone (mobile phone), a pad (pad), a computer having a wireless transceiver function, a virtual reality (virtual reality, VR) terminal device, an augmented reality (augmented reality, AR) terminal device, a wireless terminal device in industrial control (industrial control), a wireless terminal device in self driving (self driving), a wireless terminal device in remote medical (remote medical), a wireless terminal device in a smart grid (smart grid), a wireless terminal device in transportation safety (transportation safety), a wireless terminal device in a smart city (smart city), a wireless terminal device in a smart home (smart home), or the like.

The AN node may be a device that provides wireless access for the UE, including but not limited to an evolved NodeB (evolved NodeB, eNB for short), a wireless-fidelity access point (wireless-fidelity access point, Wi-Fi AP for short), a worldwide interoperability for microwave access base station (worldwide interoperability for microwave access base station, WiMAX BS for short), a base station (for example, a gNodeB or a gNB) in a 5G network, and the like. Alternatively, the AN node may be a (radio access network, RAN) node or an access node in a subsequently evolved network.

The UPF network element may process a packet. For example, the UPF may perform functions such as user data forwarding, routing, data statistics collection, rate limiting, and statistics reporting.

The AMF network element may perform mobility management in a mobile network, for example, user location update, user network registration, and user handover. The AMF network element may access non-access stratum (non-access stratum, NAS) signaling (including session management (session management, SM) signaling) of the UE through an N1 interface, or may access RAN signaling through an N2 interface, to complete a user registration procedure, SM signaling forwarding, and mobility management. The AMF network element may forward a message between the SMF network element and the UE.

The SMF network element may perform session management, such as session establishment, session modification, and session release, in the mobile network.

The PCF network element may manage a user policy, including a mobility-related policy and a protocol data unit (Protocol Data Unit, PDU) session-related policy, such as a quality of service (quality of service, QoS) policy and a charging policy.

The NSSF network element is used to select a network slice (network slice). The network slice is a logically isolated network used for supporting a specific network capability and network feature, and may include an entire network in an end-to-end (end-to-end, E2E) manner, or some network functions may be shared by a plurality of network slices. The network slice is a key technology for satisfying differentiated requirements of a network in a fifth 5G mobile communication technology proposed by 3GPP. Generally, network features of different network slices are different, and the network slices need to be isolated from each other to prevent mutual interference. For example, a network slice of an augmented reality (augmented reality, AR) service or a virtual reality (virtual reality, VR) service requires high bandwidth and a low delay. A network slice of an internet of things (internet of things, IoT) service requires support of access of massive terminals, but requires low bandwidth and has no requirement on a delay.

The UDM network element is responsible for managing information such as user subscription data, and the UDM network element may provide the user subscription data for a network element such as the AMF and the SMF.

The UDR network element stores structured data of a network, including user subscription data information and a user policy. The UDM may read terminal subscription data from the UDR, and the PCF may read user policy information from the UDR. The UDR may also be divided into two parts, to be respectively combined with the UDM network element and the PCF network element, and is not independently deployed.

The NRF network element stores registration information of another function network element, and provides, based on the registration information, a service of searching and discovering each other between network function network elements.

The NEF network element is responsible for authorizing and controlling an exposure service and capability of a network. An AF network element located outside an operator network may provide network data for the network by using the NEF network element, or may obtain the exposure service and data of the network by using the NEF.

The DN is used to provide a data service for the UE, and may be an access destination of a PDU session of the user. The DN may be a PDN network such as Internet (internet) or an IP multimedia service (IP multimedia Service, IMS).

The AF network element may send a request to affect a routing policy of the SMF, and is responsible for selecting and relocating an application in the local DN. The AF mainly performs a dynamic policy or charging control on forwarding plane behavior. The services need the dynamic policy and the charging control. The AF transmits dynamic session information required by the PCF.

In embodiments of this application, both the first PLMN and the second PLMN may use the architecture shown in FIG. 2. Certainly, the first PLMN and the second PLMN may also use another network architecture, for example, an evolved packet core network (Evolved Packet Core network, EPC) architecture or a future evolved system architecture. This is not limited herein.

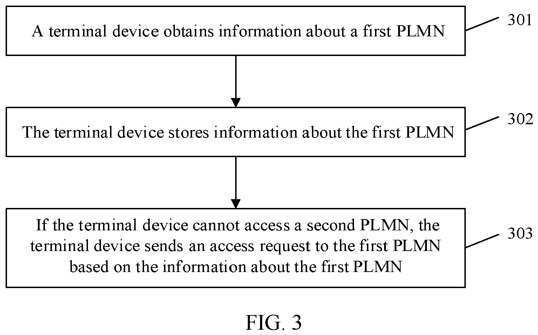

FIG. 3 is a schematic diagram of a roaming method according to an embodiment of this application. The roaming method includes the following steps.

### 301: A terminal device obtains information about a first PLMN

In this embodiment of this application, a dynamic roaming agreement exists between the first PLMN and a second PLMN. In a possible implementation, that a dynamic roaming agreement exists between the first PLMN and a second PLMN includes: If the terminal device can access the second PLMN, the roaming agreement between the first PLMN and the second PLMN is deactivated. If the terminal device cannot access the second PLMN, the roaming agreement between the first PLMN and the second PLMN is activated. For example, the first PLMN may be a VPLMN of the terminal device, and the second PLMN may be an HPLMN of the terminal device.

If the terminal device can access the second PLMN, that the roaming agreement between the first PLMN and the second PLMN is deactivated may mean that no roaming agreement exists between the first PLMN and the second PLMN, or the roaming agreement between the first PLMN and the second PLMN is unavailable.

If the terminal device cannot access the second PLMN, that the roaming agreement between the first PLMN and the second PLMN is activated may mean that the roaming agreement exists between the first PLMN and the second PLMN, or the roaming agreement between the first PLMN and the second PLMN is available.

It may be understood as: A temporary roaming agreement exists between the first PLMN and the second PLMN, and if the terminal device can access the second PLMN, the temporary roaming agreement is invalid, if the terminal device cannot access the second PLMN, the temporary roaming agreement is valid.

In another possible implementation, that a dynamic roaming agreement exists between the first PLMN and the second PLMN includes: If a first condition is satisfied, the roaming agreement between the first PLMN and the second PLMN is valid. The first condition may be that the second PLMN is faulty, or the terminal device cannot access the second PLMN

In this embodiment of this application, the dynamic roaming agreement may also be referred to as the temporary roaming agreement. This is not limited in this application.

In this embodiment of this application, the terminal device may obtain information about a plurality of first PLMNs, for example, information about a first PLMN list. The first PLMN list includes the information about the plurality of first PLMNs.

In this embodiment of this application, the terminal device may obtain the information about the first PLMN in the following two manners.

### Manner 1

In a process in which the terminal device registers with the second PLMN, the terminal device receives the information about the first PLMN from a core network element in the second PLMN

In a possible implementation, the core network element is an access management network element. When the first PLMN and the second PLMN use a 5G network architecture, the access management network element may be an AMF network element. When the first PLMN and the second PLMN use a 4G network architecture, the access management network element may be a mobility management entity (mobility management entity, MME). In this embodiment of this application, an example in which the access management network element is the AMF network element is used for description.

In a possible implementation, after the terminal device selects the second PLMN and sends a registration request message to the AMF network element, the AMF network element obtains subscription data of the terminal device from a UDM network element. The subscription data includes information about the first PLMN. After the terminal device successfully registers with the second PLMN, the AMF sends a registration accept message to the terminal device. The registration accept message includes the information about the first PLMN. In another possible implementation, the AMF network element may further obtain the information about the first PLMN from another network element in the second PLMN, for example, a PCF network element or an OAM network element.

In a possible implementation, the information about the first PLMN includes identity information about the first PLMN, for example, an identity (ID) of the first PLMN. The information about the first PLMN may further include at least one of the following information: a type of an access technology for allowing the terminal device to access the first PLMN, area information for allowing the terminal device to access the first PLMN, a condition for accessing the first PLMN by the terminal device, or priority information about the first PLMN. The priority information about the first PLMN may be understood as a priority of accessing the first PLMN by the terminal device or a rank of accessing the first PLMN by the terminal device in a plurality of PLMNs that the terminal device sequentially attempts to access. The priority information about the first PLMN may alternatively be referred to as a priority of the first PLMN in a network selection list of the terminal device. This is not limited herein.

In a possible implementation, the type of the access technology type for allowing the terminal device to access the first PLMN includes a 3rd generation partnership project (3rd Generation Partnership Project, 3GPP) access technology and/or a non-3GPP (Non-3GPP) access technology.

In a possible implementation, the area information for allowing the terminal device to access the first PLMN may include a tracking area (Tracking Area, TA) identifier. For example, the area information may be information about an area that is in the first PLMN and in which the terminal device is allowed to access the first PLMN in an area in which a fault occurs in the second PLMN. It may be understood that there is an overlapping area between the area that is in the first PLMN and in which the terminal device is allowed to access the first PLMN and the area that is in the second PLMN and in which the fault occurs. In this way, a terminal device located in the area that is in the second PLMN and in which the fault occurs may be allowed to access the first PLMN without moving, so that service experience of the terminal device is improved.

In a possible implementation, the condition for accessing the first PLMN by the terminal device may include: The terminal device receives indication information (a condition 1) that is sent by the first PLMN and that is used to indicate that the dynamic roaming agreement between the first PLMN and the second PLMN is activated, and/or the terminal device can access no PLMN whose priority is higher than that of the first PLMN (a condition 2).

In a possible implementation, the priority information about the first PLMN includes that a priority of the first PLMN is lower than a priority of any one of the following PLMNs: a priority of the second PLMN, a priority of an equivalent PLMN (Equivalent PLMN, EPLMN) of the second PLMN, a priority of a user controlled PLMN, or a priority of an operator controlled PLMN. When the terminal device attempts to access a PLMN, a network selection sequence of the terminal device is: (1) the second PLMN, (2) the equivalent PLMN of the second PLMN, (3) the user controlled PLMN, (4) the operator controlled PLMN, and (5) the first PLMN. That is, when the terminal device sequentially attempts to access: (1) the second PLMN, (2) the equivalent PLMN of the second PLMN, (3) the user controlled PLMN, and (4) the operator controlled PLMN, but the access fails, the terminal device may attempt to access the first PLMN

In a possible implementation, the priority information about the first PLMN includes: The priority of the first PLMN is higher than a priority of a PLMN selected by a user based on a quality of service requirement, or the priority of the first PLMN is lower than a priority of an operator controlled PLMN and higher than a priority of a PLMN selected by a user based on a quality of service requirement. When the terminal device cannot access the operator controlled PLMN, the terminal device may attempt to access the first PLMN. If the terminal device cannot access the first PLMN, the terminal device may attempt to access the PLMN selected by the user based on the quality of service requirement.

### Manner 2

In a process in which the terminal device attempts to access the first PLMN, the terminal device receives the information about the first PLMN from a core network element in the first PLMN. For details of the core network element, refer to the descriptions in manner 1. Specifically, the terminal device sends the registration request to the AMF network element in the first PLMN. The AMF network element determines whether the first PLMN and the second PLMN have signed the dynamic roaming agreement. If the first PLMN and the second PLMN have not signed the dynamic roaming agreement, or although the first PLMN and the second PLMN have signed the dynamic roaming agreement, the dynamic roaming agreement is not activated, the AMF network element rejects access of the terminal device to the first PLMN. The AMF network element sends a registration reject message to the terminal device. The registration reject message includes indication information indicating that the dynamic roaming agreement between the first PLMN and the second PLMN is not activated. The registration reject message may further include the information about the first PLMN. For details of information about the first PLMN, refer to the descriptions in manner 1.

### 302: The terminal device stores the information about the first PLMN

In a possible implementation, the terminal device may store the information about the first PLMN into a PLMN selection list of the terminal device. The PLMN selection list of the terminal device may also be referred to as a PLMN network selection list of the terminal device, or a PLMN access priority list of the terminal device. PLMNs in the list have different priority sequences, and the terminal device sequentially accesses corresponding PLMN networks in descending order of priorities. Certainly, the terminal device may alternatively store the information about the first PLMN in other content of the terminal device. This is not limited in this embodiment of this application.

In a possible implementation, the PLMN selection list of the terminal device is shown in Table 1:

**Table 1**

| PLMN priority | PLMN list |
|---|---|
| 1 | HPLMN or EHPLM |
| 2 | User controlled PLMN |
| 3 | Operator controlled PLMN |
| 4 | Dynamic roaming PLMN |
| 5 | PLMN selected based on a quality of service requirement |
| 6 | Another PLMN |

In Table 1, network selection priorities of PLMNs are represented in descending order from 1 to 6. A PLMN ranking "1" corresponds to a highest network selection priority, and a PLMN ranking "6" corresponds to a lowest network selection priority. For example, the HPLMN or EHPLMN has a highest priority. The user controlled PLMN has a second highest priority. Further, Table 1 may further include an access technology type corresponding to the user controlled PLMN. The operator controlled PLMN has a third highest priority. Further, Table 1 may further include an access technology type corresponding to the operator controlled PLMN. The dynamic roaming PLMN refers to the first PLMN. The dynamic roaming PLMN has a fourth highest priority. After obtaining information about the first PLMN, the terminal device stores the information about the first PLMN in the dynamic roaming PLMN. The PLMN selected based on the quality of service requirement has a fifth highest priority. The PLMN selected based on the quality of service requirement means that the terminal device selects, based on signal quality and/or an access technology type of each PLMN, a PLMN that satisfies the quality requirement.

It should be noted that the information about the first PLMN (that is, the dynamic roaming PLMN in Table 1) is added to Table 1 only after the UE obtains the information about the first PLMN. It may be understood as: The dynamic roaming PLMN in Table 1 is dynamically generated by the terminal device based on the received dynamic roaming PLMN information. Before the UE obtains the information about the first PLMN, the PLMN selection list of the terminal device does not include the information about the first PLMN, that is, Table 1 does not include the information about the first PLMN. In this case, the terminal device does not consider the information about the first PLMN in a network selection process.

In a possible manner, content in the foregoing Table 1 may be stored in a subscriber identity module (Subscriber Identity Module, SIM) of the terminal device.

In a possible implementation, if the terminal device accesses a PLMN through automatic network selection, the terminal device may sequentially select, based on the priorities of the PLMNs in Table 1, corresponding PLMNs to access.

### 303: If the terminal device cannot access the second PLMN, the terminal device sends an access request to the first PLMN based on the information about the first PLMN

In a possible implementation, if the terminal device cannot access the second PLMN because the second PLMN is faulty, the second PLMN signs the dynamic roaming agreement with the first PLMN, or the dynamic roaming agreement between the second PLMN and the first PLMN is activated. The terminal device may attempt to access the first PLMN

In a possible implementation, the access request may be a registration request.

In a possible implementation, if the information about the first PLMN includes a type of an access technology for allowing the terminal device to access the first PLMN, the terminal device accesses the first PLMN by using the type of access technology.

In this embodiment of this application, the terminal device may send the access request to the first PLMN in the following two manners.

### Manner 1

The terminal device sequentially accesses corresponding PLMNs based on the priorities of the PLMNs in Table 1. If the terminal device can access no PLMN whose priority is higher than that of the first PLMN, the terminal device sends the access request to the first PLMN. Specifically, if the terminal device cannot access the HPLMN or the EHPLM, the user controlled PLMN, and the operator controlled PLMN, the terminal device sends the access request to the dynamic roaming PLMN

In a possible implementation, if there are a plurality of dynamic roaming PLMNs, priorities may also be set between the plurality of dynamic roaming PLMNs, and the terminal device may select a corresponding dynamic roaming PLMN for access based on a priority of each dynamic roaming PLMN. In another possible implementation, if there are a plurality of dynamic roaming PLMNs, the terminal device may randomly select a corresponding dynamic roaming PLMN for access or based on a position sequence of the dynamic roaming PLMNs in Table 1.

### Manner 2

After the second PLMN and the first PLMN sign the dynamic roaming agreement, or the dynamic roaming agreement between the second PLMN and the first PLMN is activated, the first PLMN sends a notification message to the terminal device. The notification message is used to notify the terminal device that the dynamic roaming agreement between the first PLMN and the second PLMN is activated. In a possible implementation, the notification message may include the information about the first PLMN. The terminal device sends the access request to the first PLMN based on the notification message.

In a possible implementation, the notification message may be a broadcast message sent by an access network device in the first PLMN

In this embodiment of this application, if the terminal device cannot access the first PLMN, the terminal device does not add the first PLMN to a list of access-forbidden (forbidden) PLMNs. If the first PLMN includes a plurality of PLMNs, the terminal device may select another PLMN in the first PLMN and attempt to access the another PLMN. In this way, it can be avoided that the terminal device cannot select the first PLMN in an automatic network selection mode.

In this embodiment of this application, the terminal device obtains the information about the first PLMN, where the dynamic roaming agreement exists between the first PLMN and the second PLMN. If the terminal device cannot access the second PLMN because the second PLMN is faulty, the terminal device sends the access request to the first PLMN based on the information about the first PLMN, so that service waiting time of the terminal device can be reduced, and service experience of a user can be improved.

The following describes the roaming method in this embodiment of this application in detail by using an example in which the first PLMN is a VPLMN, the second PLMN is an HPLMN, and the terminal device is UE.

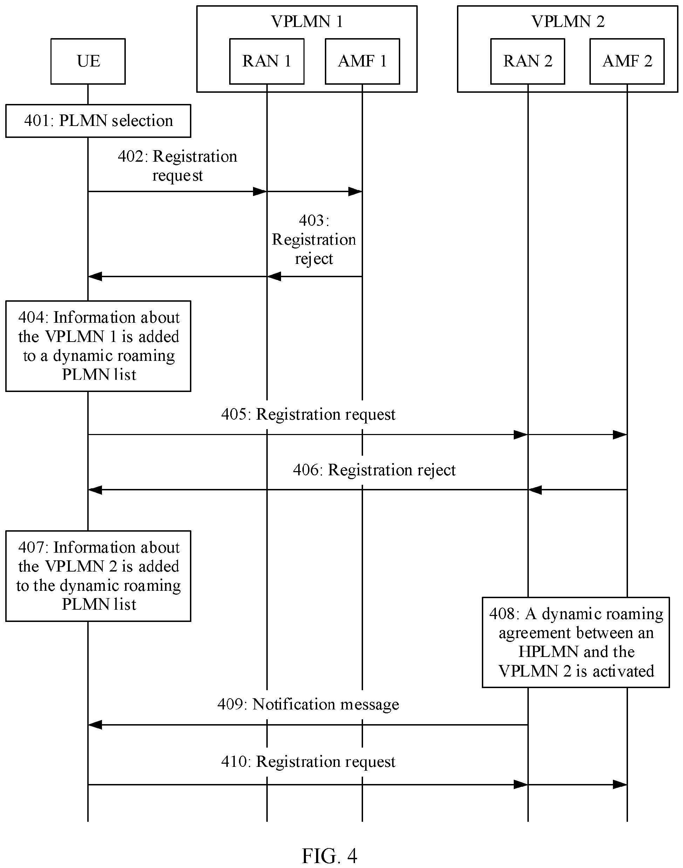

In the embodiment shown in FIG. 4, there are two VPLMNs: a VPLMN 1 and a VPLMN 2. The VPLMN 1 includes an access network device (for example, a RAN 1) and an access management network element (for example, an AMF 1). The VPLMN 2 includes an access network device (for example, a RAN 2) and an access management network element (for example, an AMF 2). Certainly, the VPLMN 1 and the VPLMN 2 may also each include another network element. This is not limited herein. In this embodiment, the UE obtains a dynamic roaming PLMN list based on a registration reject message from the VPLMN. Specifically, the method includes the following steps.

### 401: The UE selects a PLMN

In a possible implementation, the UE performs PLMN selection in an automatic network selection mode, and the UE may sequentially select, based on a priority sequence of the HPLMN or an EHPLM, a user controlled PLMN, and an operator controlled PLMN, a corresponding PLMN for access. If the UE cannot access the HPLMN or the EHPLM, the user controlled PLMN, and the operator controlled PLMN, but a VPLMN 1 in a current network can be accessed, the UE selects the VPLMN 1 for access. The foregoing network selection order is merely an example for description, and is not limited in this application. The UE may alternatively choose to access the VPLMN 1 based on another network selection order. For example, the UE may directly select the VPLMN 1 for access.

### 402: The UE sends a registration request (registration request) message to the AMF 1 by using the RAN 1 in the VPLMN 1.

In a possible implementation, the registration request message includes at least one of the following information: a registration type, a permanent identifier of the UE (for example, a subscription permanent identifier (Subscription Permanent Identifier, SUPI)), a temporary identifier of the UE, a security parameter, requested network slice selection assistance information (Network Slice Selection Assistance Information, NSSAI), a 5G core network capability of the UE, and the like.

### 403: The AMF 1 sends a registration reject (registration reject) message to the UE through the RAN 1.

In a possible implementation, if the AMF 1 determines that the HPLMN of the UE has signed a dynamic roaming agreement with the VPLMN 1, but the dynamic roaming agreement has not been activated, the AMF 1 rejects access of the UE to the VPLMN 1. The AMF 1 sends the registration reject message to the UE. The registration reject message includes cause information for rejection. For example, the cause information may be that the dynamic roaming agreement between the VPLMN 1 and the HPLMN is not activated. Further, the registration reject message may further include information about the VPLMN 1. For details of the information about the VPLMN 1, refer to the descriptions of the information about the first PLMN in 301.

### 404: The UE adds the information about the VPLMN 1 to the dynamic roaming PLMN list.

In a possible implementation, after receiving the registration reject message, the UE determines, based on the cause information in the registration reject message, that the dynamic roaming agreement between the VPLMN 1 and the HPLMN is not activated. The UE adds the information about the VPLMN 1 to the dynamic roaming PLMN list. A priority of the VPLMN 1 is lower than a priority of the operator controlled PLMN and higher than a priority of a PLMN selected by a user based on a quality of service requirement.

### 405: The UE sends the registration request message to the AMF 2 through the RAN 2 in the VPLMN 2.

Because the UE cannot access the VPLMN 1, the UE selects the VPLMN 2 and attempts to access the VPLMN 2.

For a specific manner in which the UE sends the registration request message to the AMF 2, refer to the descriptions in 402.

### 406. The AMF 2 sends the registration reject message to the UE through the RAN 2.

The registration reject message is similar to the registration reject message in step 403. For details, refer to the descriptions in step 403.

### 407: The UE adds the information about the VPLMN 2 to the dynamic roaming PLMN list.

In this embodiment of this application, the dynamic roaming PLMN list may be a list of dynamic roaming PLMNs with a fourth priority in Table 1.

Specifically, after receiving the registration reject message, the UE determines, based on the cause information in the registration reject message, that the dynamic roaming agreement between the VPLMN 2 and the HPLMN is not activated. The UE adds the information about the VPLMN 2 to the PLMN selection list stored on the UE. A priority of the VPLMN 2 is lower than the priority of the operator controlled PLMN and higher than the priority of the PLMN selected by a user based on a quality of service requirement.

In a possible implementation, if no priority exists between the VPLMN 1 and the VPLMN 2, the information about the VPLMN 1 and the VPLMN 2 is stored in the dynamic roaming PLMN list based on a receiving order, as shown in Table 2. If priorities exist between the VPLMN 1 and the VPLMN 2, the information about the VPLMN 1 and the VPLMN 2 is stored in the dynamic roaming PLMN list based on a priority sequence.

**Table 2**

| Dynamic roaming PLMN | Access technology for allowing UE to access | Area in which UE is allowed to access | Condition for allowing UE to access |
|---|---|---|---|
| VPLMN 1 ID | 3GPP access | TA-1, TA-2 | Condition 2 |
| VPLMN 2 ID | Non-3GPP access | TA-3, TA-4 | Condition 1 |

In this embodiment of this application, although the UE fails to register with the VPLMN 1 and the VPLMN 2, the UE does not add the VPLMN 1 and the VPLMN 2 to an access-forbidden PLMN list (forbidden PLMN list). This is because once the UE adds the VPLMN 1 and the VPLMN 2 to the access-forbidden PLMN list, the UE does not attempt to access the VPLMN 1 and the VPLMN 2 subsequently.

Through the foregoing 401 to 407, the UE implements update of the PLMN selection list.

### 408: The dynamic roaming agreement between the HPLMN and the VPLMN 2 is activated.

If the HPLMN is faulty at a specific moment, the UE cannot access the HPLMN normally. In this case, the dynamic roaming agreement between the HPLMN and the VPLMN 2 is activated.

In a possible implementation, the activation of the dynamic roaming agreement between the HPLMN and the VPLMN 2 may be initiated by the HPLMN. For example, when the HPLMN is faulty, an OAM system of the HPLMN may send an indication message to an OAM system of the VPLMN 2, to indicate to activate the dynamic roaming agreement between the HPLMN and the VPLMN 2.

In another possible implementation, the activation of the dynamic roaming agreement between the HPLMN and the VPLMN 2 may be initiated by the VPLMN 2. For example, when the VPLMN 2 knows that the HPLMN is faulty, the OAM system of the VPLMN 2 decides to activate the dynamic roaming agreement between the HPLMN and the VPLMN 2.

### 409: The RAN 2 in the VPLMN 2 sends a notification message to the UE.

Specifically, the RAN 2 sends a broadcast message to the UE in an area in which dynamic roaming is allowed. The area in which dynamic roaming is allowed is an area in which the UE is allowed to access the VPLMN 2, and the area may be identified by using a TA. For example, a TA-3 and a TA-4 in Table 2. That the RAN 2 is located in an area in which the UE is allowed to access the VPLMN 2 may be understood as that the RAN 2 belongs to the TA-3 or the TA-4. In a possible implementation, if the area in which the UE is allowed to access the VPLMN 2 includes a plurality of RANs, the plurality of RANs simultaneously send a broadcast message to the UE. The broadcast message includes indication information indicating that the dynamic roaming agreement between the HPLMN and the VPLMN 2 is activated. The broadcast message may further include information about the VPLMN 2. For details of the information about the VPLMN 2, refer to the descriptions of the information about the first PLMN in 301.

### 410: The UE sends the registration request message to the AMF 2 through the RAN 2 in the VPLMN 2.

After receiving the broadcast message, the UE attempts to access the VPLMN 2 in the dynamic roaming PLMN list.

Specifically, if the information that is about the VPLMN 2 and that is stored in the UE further includes a type of an access technology accessed by the UE, the UE selects a corresponding access technology type (for example, non-3GPP access in Table 2) and accesses the VPLMN 2. If the information that is about the VPLMN 2 and that is stored in the UE further includes information about an area accessed by the UE, after the UE accesses the VPLMN 2, to ensure that a service is normally performed, the UE may further choose not to move out of the area.

In this process, if the VPLMN 2 fails to access the network, the UE does not add the VPLMN 2 to the access-forbidden PLMN list. The UE may continue to attempt to access another PLMN in the dynamic roaming PLMN list, for example, the VPLMN 1.

In a possible implementation, after the UE successfully registers with the VPLMN 2, the UE may periodically attempt to access a PLMN network with a higher priority, for example, an HPLMN. In this way, the UE may return to the HPLMN network again, and be handed over from a dynamic roaming network to a home network, that is, deactivation of the dynamic roaming is implemented.

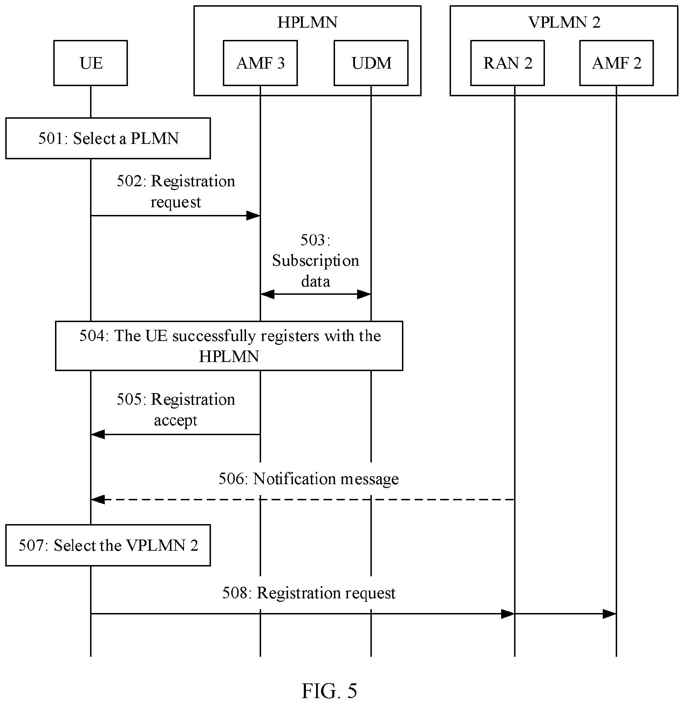

In an embodiment shown in FIG. 5, there is a VPLMN 2. The VPLMN 2 includes an access network device (for example, a RAN 2) and an access management network element (for example, an AMF 2). An HPLMN includes a UDM network element and an access management network element (for example, an AMF 3). The VPLMN 2 and the HPLMN may also each include another network element. This is not limited herein. In this embodiment, UE obtains a dynamic roaming PLMN list through a process of registering with the HPLMN Specifically, the method includes the following steps.

### 501: UE selects a PLMN

The UE selects the HPLMN for access.

### 502: The UE sends a registration request message to the AMF 3 in the HPLMN

A method for sending the registration request message by the UE to the AMF 3 in the HPLMN is similar to the method for sending the registration request message in 402. For details, refer to the descriptions in 402.

### 503: The AMF 3 obtains subscription data (subscription data) of the UE from the UDM network element.

In a possible implementation, the subscription data includes information about one or more dynamic roaming PLMNs, for example, information about the VPLMN 2. For details of the information about the dynamic roaming PLMN or the information about the VPLMN 2, refer to the descriptions of the information about the first PLMN in 301 or the descriptions of Table 2 in 407.

### 504: The UE completes another step in the registration process to successfully register with the HPLMN

### 505: The AMF 3 sends a registration accept message to the UE.

The registration accept message includes the information about the dynamic roaming PLMN, for example, the information about the VPLMN 2. For details, refer to the descriptions of the information about the first PLMN in 301 or the descriptions of Table 2 in 407.

In a possible implementation, the registration accept message may further include indication information, where the indication information is used to indicate the UE not to add, if the UE fails to access a dynamic roaming PLMN, the dynamic roaming PLMN that fails to be accessed to the access-forbidden PLMN list.

After receiving the registration accept message, the UE stores the received dynamic roaming PLMN information in the dynamic roaming PLMN list of the UE. For details, refer to the descriptions in 407.

Through the foregoing 501 to 505, the UE implements update of the PLMN selection list.

After the UE normally accesses the HPLMN, if the HPLMN is faulty, the UE cannot access the HPLMN. In this case, the dynamic roaming agreement between the HPLMN and the VPLMN 2 is activated. For details, refer to the descriptions in 408.

### 506: The RAN 2 in the VPLMN 2 sends a notification message to the UE.

For details, refer to the descriptions in 409.

### 507: The UE selects the VPLMN 2.

In a possible implementation, the UE selects the VPLMN 2 for access based on the notification message in 506. For example, the UE chooses to access the VPLMN 2 based on identity information about the VPLMN 2 included in the notification message.

In another possible implementation, the VPLMN 2 may not send the notification message to the UE. The UE sequentially selects corresponding PLMNs for access based on priorities of PLMNs in a PLMN selection list (for example, Table 1). If the UE cannot access any PLMN whose priority is higher than that of the VPLMN 2, the UE chooses to access the VPLMN 2.

### 508: The UE sends the registration request message to the AMF 2 through the RAN 2 in the VPLMN 2.

For details, refer to the descriptions in 410.

In embodiments in FIG. 4 and FIG. 5, for details of same or similar content, refer to the descriptions of the embodiment in FIG. 3.

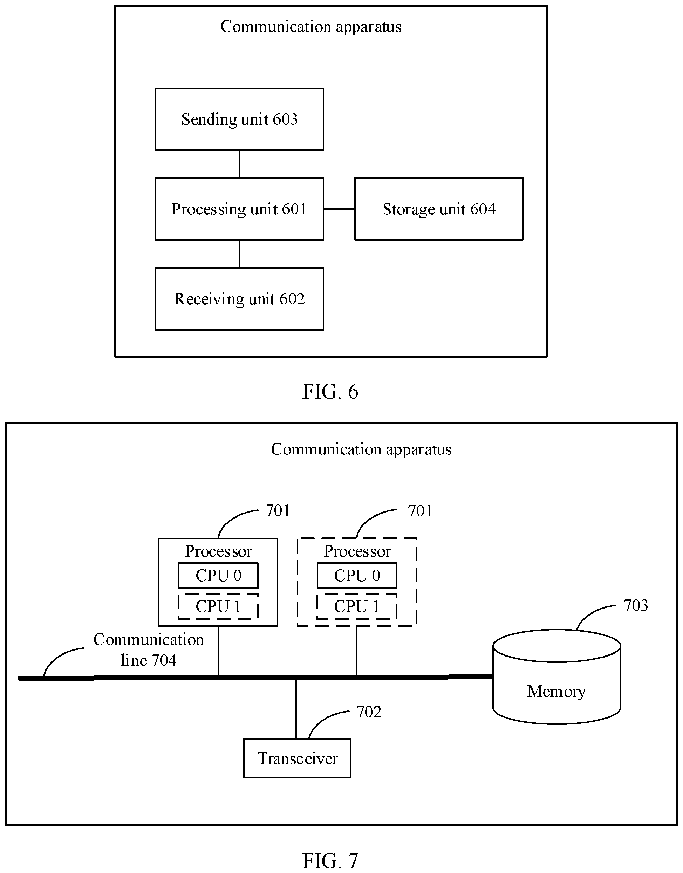

FIG. 6 is a schematic diagram of a communication apparatus according to an embodiment of this application. Specifically, the apparatus includes a processing unit 601, a receiving unit 602, and a sending unit 603. The communication apparatus may further include a storage unit 604. The processing unit 601, the receiving unit 602, the sending unit 603, and the storage unit 604 may be physically separated units, or may be integrated into one or more physical units. This is not limited herein.

The receiving unit 602 and the sending unit 603 are configured to exchange content between the processing unit 601 and another unit or network element. Specifically, the sending unit 603 may be a transmit circuit or a transmitter. The receiving unit 602 may be a receiving circuit or a receiver. The sending unit 603 and the receiving unit 602 may alternatively be a transceiver of the communication apparatus. The sending unit 603 and the receiving unit 602 may alternatively be a communication interface or a transceiver circuit of the processing unit 601. Optionally, the sending unit 603 and the receiving unit 602 may alternatively be a transceiver chip.

Although FIG. 6 shows only one sending unit 603 and one receiving unit 602, alternatively the communication apparatus may include a plurality of sending units 603 and a plurality of receiving units 602. The sending unit 603 and the receiving unit 602 may alternatively be a subunit of one or more transceiver units.

The processing unit 601 is used by the communication apparatus to process data. The processing unit 601 may be a processing circuit or may be a processor. The processor may be a central processing unit (central processing unit, CPU), a network processor (network processor, NP), or a combination of a CPU and an NP. The processor may further include a hardware chip. The hardware chip may be an application-specific integrated circuit (application-specific integrated circuit, ASIC), a programmable logic device (programmable logic device, PLD), or a combination thereof. The PLD may be a complex programmable logic device (complex programmable logic device, CPLD), a field-programmable gate array (field-programmable gate array, FPGA), a generic array logic (Generic Array Logic, GAL), or any combination thereof.

Although FIG. 6 shows only one processing unit 601, alternatively the communication apparatus may include a plurality of processing units, or the processing unit 601 includes a plurality of sub data processing units. Specifically, the processor may be a single-core (single-CPU) processor, or may be a multi-core (multi-CPU) processor.

The storage unit 604 is configured to store computer instructions executed by the processing unit 601. The storage unit 604 may be a storage circuit or may be a memory. The memory may be a volatile memory or a non-volatile memory, or may include both a volatile memory and a non-volatile memory. The non-volatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM) and is used as an external cache.

The storage unit 604 may be a unit independent of the processing unit 601, or may be a storage unit in the processing unit 601. This is not limited herein. Although FIG. 6 shows only one storage unit, alternatively the communication apparatus may include a plurality of storage units, or the storage unit includes a plurality of storage subunits.

In embodiments of this application, the processing unit 601 may exchange content with another network element by using the sending unit 603 and the receiving unit 602. For example, the processing unit 601 obtains or receives content from the another network element.

In a possible implementation, the processing unit 601, the sending unit 603, the receiving unit 602, and the storage unit 604 may be connected to each other by using a bus. The bus may be a peripheral component interconnect (peripheral component interconnect, PCI) bus or an extended industry standard architecture (extended industry standard architecture, EISA) bus, or the like. The bus may be classified into an address bus, a data bus, a control bus, and the like.

The communication apparatus may be the terminal device in embodiments in FIG. 3 to FIG. 5. Specifically, the processing unit 601 is configured to obtain information about a first PLMN, where a dynamic roaming agreement exists between the first PLMN and a second PLMN, and further configured to determine that the communication apparatus cannot access the second PLMN. The sending unit 603 is configured to send an access request to the first PLMN based on the information about the first PLMN

In a possible implementation, the receiving unit 602 is configured to receive the information about the first PLMN from a core network element in the second PLMN in a process in which the communication apparatus registers with the second PLMN The processing unit 601 is configured to obtain the information about the first PLMN by using the receiving unit 602.

In a possible implementation, the sending unit 603 is further configured to send a registration request to a core network element in the first PLMN. The receiving unit 602 is configured to receive a registration reject message from the core network element. The processing unit 601 is configured to obtain the information about the first PLMN based on the registration reject message.

In a possible implementation, the registration reject message includes the information about the first PLMN, and/or the registration reject message includes information indicating that the dynamic roaming agreement between the first PLMN and the second PLMN is not activated.

In a possible implementation, the processing unit 601 is further configured to determine, before the sending unit 603 sends the access request, that the communication apparatus can access no PLMN whose priority is higher than the first PLMN

In a possible implementation, the receiving unit 602 is configured to receive a notification message from the first PLMN, where the notification message is used to notify the communication apparatus that the dynamic roaming agreement between the first PLMN and the second PLMN is activated, and the notification message includes the information about the first PLMN. The sending unit 603 is configured to send the access request to the first PLMN based on the notification message.

In a possible implementation, the processing unit 601 is further configured to determine that the communication apparatus cannot access the first PLMN, and skip adding the first PLMN to an access-forbidden PLMN list.

In a possible implementation, the first PLMN and the second PLMN have a same mobile country code, and a mobile network code of the first PLMN is different from a mobile network code of the second PLMN

In a possible implementation, that a dynamic roaming agreement exists between the first PLMN and a second PLMN includes: If the communication apparatus can access the first PLMN, a roaming agreement between the first PLMN and the second PLMN is deactivated; if the communication apparatus cannot access the second PLMN, a roaming agreement between the first PLMN and the second PLMN is activated.

In a possible implementation, the information about the first PLMN includes at least one of the following information: identity information about the first PLMN, a type of an access technology for allowing the communication apparatus to access the first PLMN, area information for allowing the communication apparatus to access the first PLMN, a condition for the communication apparatus to access the first PLMN, or priority information about the first PLMN

In a possible implementation, the priority information about the first PLMN includes that a priority of the first PLMN is lower than a priority of any one of the following PLMNs: a priority of the second PLMN, a priority of an equivalent PLMN of the second PLMN, a priority of a user controlled PLMN, or a priority of an operator controlled PLMN; or
the priority information about the first PLMN includes: the priority of the first PLMN is higher than a priority of a PLMN selected by a user based on a quality of service requirement, or the priority of the first PLMN is lower than a priority of an operator controlled PLMN and higher than a priority of a PLMN selected by a user based on a quality of service requirement.

In a possible implementation, a condition for accessing the first PLMN by the communication apparatus includes: The receiving unit 602 receives indication information that is sent by the first PLMN and that is used to indicate that the dynamic roaming agreement between the first PLMN and the second PLMN is activated, and/or the communication apparatus can access no PLMN whose priority is higher than that of the first PLMN

In a possible implementation, the storage unit 604 is configured to store the information about the first PLMN into a PLMN selection list.

In this embodiment of this application, the first PLMN may be a VPLMN, and the second PLMN is an HPLMN

In this embodiment of this application, the receiving unit 602 is configured to perform a signal receiving operation of the terminal device in embodiments in FIG. 3 to FIG. 5. The sending unit 603 is configured to perform a signal sending operation of the terminal device in embodiments in FIG. 3 to FIG. 5. The processing unit 601 is configured to perform a signal processing operation of the terminal device in embodiments in FIG. 3 to FIG. 5. For details, refer to the descriptions of embodiments of FIG. 3 to FIG. 5.

In a possible implementation, the processing unit 601 enables, based on the computer instructions stored in the storage unit 604, the communication apparatus to perform the operations of the terminal device in embodiments of FIG. 3 to FIG. 5.

The communication apparatus may alternatively be the access management network element in FIG. 4 or FIG. 5, for example, the AM 1, the AMF 2, or the AMF 3. Correspondingly, the receiving unit 602 is configured to perform a signal receiving operation of the AMF network element in the embodiment of FIG. 4 or FIG. 5. The sending unit 603 is configured to perform a signal sending operation of the AMF network element in the embodiment of FIG. 4 or FIG. 5. The processing unit 601 is configured to perform a signal processing operation of the AMF network element in the embodiment of FIG. 4 or FIG. 5. For details, refer to the descriptions of the embodiment of FIG. 4 or FIG. 5.

In a possible implementation, the processing unit 601 enables, based on the computer instructions stored in the storage unit 604, the communication apparatus to perform the operations of the AMF network element in the embodiment of FIG. 4 or FIG. 5.

FIG. 7 is a schematic diagram of another communication apparatus according to an embodiment of this application. Specifically, the communication apparatus includes at least one processor 701, a transceiver 702, and a memory 703. The at least one processor 701, the transceiver 702, and the memory 703 are connected through a communication line 704.

The processor 701 may be a CPU, a microprocessor, an ASIC, or one or more integrated circuits configured to control program execution in solutions of this application.

The memory 703 is configured to store computer-executable instructions for executing the solutions of this application, and the processor 701 controls the execution. The processor 701 is configured to execute the computer-executable instructions stored in the memory 703, to implement the operations of the terminal device or the AMF network element in embodiments in FIG. 3 to FIG. 5 of this application.

The computer-executable instructions in this embodiment of this application may also be referred to as application program code. This is not specifically limited in this embodiment of this application.

During specific implementation, in an embodiment, the processor 701 may include one or more CPUs, for example, a CPU 0 and a CPU 1 in FIG. 7.

In specific implementation, in an embodiment, the processor 701 may be a single-core (single-CPU) processor, or may be a multi-core (multi-CPU) processor.

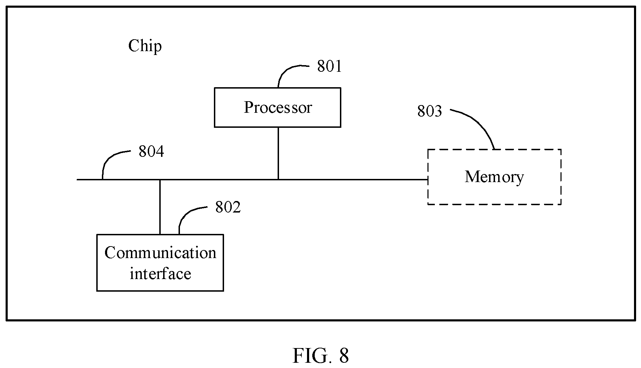

FIG. 8 is a schematic diagram of a structure of a chip or a structure of a chip system according to an embodiment of this application. The chip or the chip system includes one or more (including two) processors 801 and a communication interface 802.

The chip or the chip system may further include a memory 803. The memory 803 may include a read-only memory and a random access memory, and provide operation instructions and data for the processor 801.

In some implementations, the memory 803 stores the following elements: an execution module or a data structure, a subset thereof, or an extended set thereof.

In this embodiment of this application, the operation instructions (the operation instructions may be stored in an operating system) stored in the memory 803 are invoked to control the terminal device or the AMF network element in embodiments in FIG. 3 to FIG. 5 to perform corresponding operations.

All or a part of foregoing embodiments may be implemented by using software, hardware, firmware, or any combination thereof. When software is used to implement the embodiments, all or some of the embodiments may be implemented in a form of a computer program product. The computer program product includes one or more computer programs or instructions. When the computer programs or the instructions are loaded and executed on a computer, all or some of the procedure or functions according to embodiments of this application are implemented. The computer may be a general-purpose computer, a dedicated computer, a computer network, a network device, user equipment, or another programmable apparatus. The computer programs or the instructions may be stored in a computer-readable storage medium, or may be transmitted from a computer-readable storage medium to another computer-readable storage medium. For example, the computer programs or the instructions may be transmitted from a website, computer, server, or data center to another website, computer, server, or data center in a wired or wireless manner. The computer-readable storage medium may be any usable medium accessible by a computer, or a data storage device, such as a server or a data center, integrating one or more usable media. The usable medium may be a magnetic medium, for example, a floppy disk, a hard disk drive, or a magnetic tape, may be an optical medium, for example, a digital video disc (digital video disc, DVD), or may be a semiconductor medium, for example, a solid-state drive (solid-state drive, SSD).

Although this application is described with reference to embodiments, in a process of implementing this application that claims protection, persons skilled in the art may understand and implement another variation of the disclosed embodiments by viewing the accompanying drawings, disclosed content, and the appended claims. In the claims, "comprising" (comprising) does not exclude another component or another step, and "a" or "one" does not exclude a case of "a plurality of'. A single processor or another unit may implement several functions enumerated in the claims. Some measures are recorded in dependent claims that are different from each other, but this does not mean that the measures cannot be combined to produce a good effect.

## Claims

1. A roaming method, comprising:
obtaining, by a terminal device, information about a first public land mobile network PLMN, wherein a dynamic roaming agreement exists between the first PLMN and a second PLMN; and
if the terminal device cannot access the second PLMN, sending, by the terminal device based on the information about the first PLMN, an access request to the first PLMN

2. The method according to claim 1, wherein the obtaining, by a terminal device, information about a first PLMN comprises:
in a process in which the terminal device registers with the second PLMN, receiving, by the terminal device, the information about the first PLMN from a core network element in the second PLMN

3. The method according to claim 1, wherein the obtaining, by a terminal device, information about a first PLMN comprises:
sending, by the terminal device, a registration request to a core network element in the first PLMN;
receiving, by the terminal device, a registration reject message from the core network element; and
obtaining, by the terminal device, the information about the first PLMN based on the registration reject message.

4. The method according to claim 3, wherein
the registration reject message comprises the information about the first PLMN; and/or
the registration reject message comprises indication information indicating that the dynamic roaming agreement between the first PLMN and the second PLMN is not activated.

5. The method according to any one of claims 1 to 4, wherein the sending, by the terminal device based on the information about the first PLMN, an access request to the first PLMN comprises:
if the terminal device can access no PLMN whose priority is higher than that of the first PLMN, sending, by the terminal device, the access request to the first PLMN

6. The method according to any one of claims 1 to 4, wherein the method further comprises:
receiving, by the terminal device, a notification message from the first PLMN, wherein the notification message notifies the terminal device that the dynamic roaming agreement between the first PLMN and the second PLMN is activated, and the notification message comprises the information about the first PLMN; and
the sending, by the terminal device based on the information about the first PLMN, an access request to the first PLMN comprises:
sending, by the terminal device based on the notification message, the access request to the first PLMN

7. The method according to any one of claims 1 to 6, wherein the method further comprises:
if the terminal device cannot access the first PLMN, skipping adding, by the terminal device, the first PLMN to an access-forbidden PLMN list.

8. The method according to any one of claims 1 to 7, wherein the first PLMN and the second PLMN have a same mobile country code, and a mobile network code of the first PLMN is different from a mobile network code of the second PLMN

9. The method according to any one of claims 1 to 8, wherein that a dynamic roaming agreement exists between the first PLMN and a second PLMN comprises: if the terminal device can access the second PLMN, the roaming agreement between the first PLMN and the second PLMN is deactivated; if the terminal device cannot access the second PLMN, the roaming agreement between the first PLMN and the second PLMN is activated.

10. The method according to any one of claims 1 to 9, wherein the information about the first PLMN comprises identity information about the first PLMN

11. The method according to claim 10, wherein the information about the first PLMN further comprises at least one of the following information: a type of an access technology for allowing the terminal device to access the first PLMN, area information for allowing the terminal device to access the first PLMN, a condition for accessing the first PLMN by the terminal device, or priority information about the first PLMN

12. The method according to claim 11, wherein the priority information about the first PLMN comprises that a priority of the first PLMN is lower than a priority of any one of the following PLMNs: a priority of the second PLMN, a priority of an equivalent PLMN of the second PLMN, a priority of a user controlled PLMN, or a priority of an operator controlled PLMN

13. The method according to claim 11, wherein the priority information about the first PLMN comprises: a priority of the first PLMN is higher than a priority of a PLMN selected by a user based on a quality of service requirement, or a priority of the first PLMN is lower than a priority of an operator controlled PLMN and higher than a priority of a PLMN selected by a user based on a quality of service requirement.

14. The method according to claim 11, wherein the condition for accessing the first PLMN by the terminal device comprises: the terminal device receives indication information that is sent by the first PLMN and that is used to indicate that the dynamic roaming agreement between the first PLMN and the second PLMN is activated; and/or
the terminal device can access no PLMN whose priority is higher than that of the first PLMN

15. The method according to any one of claims 1 to 14, wherein the terminal device stores the information about the first PLMN into a PLMN selection list of the terminal device.

16. The method according to any one of claims 1 to 15, wherein the first PLMN is a visited public land mobile network VPLMN, and the second PLMN is a home public land mobile network HPLMN

17. A communication apparatus, comprising:
a processing unit, configured to obtain information about a first public land mobile network PLMN, wherein a dynamic roaming agreement exists between the first PLMN and a second PLMN, and further configured to determine that the communication apparatus cannot access the second PLMN; and
a sending unit, configured to send an access request to the first PLMN based on the information about the first PLMN

18. The apparatus according to claim 17, wherein the apparatus further comprises a receiving unit, configured to receive, in a process in which the communication apparatus registers with the second PLMN, the information about the first PLMN from a core network element in the second PLMN, and the processing unit is configured to obtain the information about the first PLMN by using the receiving unit.

19. The apparatus according to claim 17, wherein the apparatus further comprises a receiving unit, wherein
the sending unit is further configured to send a registration request to a core network element in the first PLMN;
the receiving unit is configured to receive a registration reject message from the core network element; and
the processing unit is configured to obtain the information about the first PLMN based on the registration reject message.

20. The apparatus according to claim 19, wherein the registration reject message comprises the information about the first PLMN; and/or
the registration reject message comprises indication information indicating that the dynamic roaming agreement between the first PLMN and the second PLMN is not activated.

21. The apparatus according to any one of claims 17 to 20, wherein
the processing unit is further configured to determine, before the sending unit sends the access request, that the communication apparatus can access no PLMN whose priority is higher than the first PLMN

22. The apparatus according to any one of claims 17 to 20, wherein
the receiving unit is configured to receive a notification message from the first PLMN, wherein the notification message is used to notify the communication apparatus that the dynamic roaming agreement between the first PLMN and the second PLMN is activated, and the notification message comprises the information about the first PLMN; and
the sending unit is configured to send the access request to the first PLMN based on the notification message.

23. The apparatus according to any one of claims 17 to 22, wherein
the processing unit is further configured to determine that the communication apparatus cannot access the first PLMN, and skip adding the first PLMN to an access-forbidden PLMN list.

24. The apparatus according to any one of claims 17 to 23, wherein the first PLMN and the second PLMN have a same mobile country code, and a mobile network code of the first PLMN is different from a mobile network code of the second PLMN

25. The apparatus according to any one of claims 17 to 24, wherein the dynamic roaming agreement between the first PLMN and the second PLMN comprises: if the communication apparatus can access the second PLMN, the roaming agreement between the first PLMN and the second PLMN is deactivated; if the communication apparatus cannot access the second PLMN, the roaming agreement between the first PLMN and the second PLMN is activated.

26. The apparatus according to any one of claims 17 to 25, wherein the information about the first PLMN comprises at least one of the following information: identity information about the first PLMN, a type of an access technology for allowing the communication apparatus to access the first PLMN, area information for allowing the communication apparatus to access the first PLMN, a condition for accessing the first PLMN by the communication apparatus, or priority information about the first PLMN

27. The apparatus according to claim 26, wherein the priority information about the first PLMN comprises that a priority of the first PLMN is lower than a priority of any one of the following PLMNs: a priority of the second PLMN, a priority of an equivalent PLMN of the second PLMN, a priority of a user controlled PLMN, or a priority of an operator controlled PLMN; or
the priority information about the first PLMN comprises: a priority of the first PLMN is higher than a priority of a PLMN selected by a user based on a quality of service requirement, or a priority of the first PLMN is lower than a priority of an operator controlled PLMN and higher than a priority of a PLMN selected by a user based on a quality of service requirement.

28. The apparatus according to claim 26, wherein the condition for accessing the first PLMN by the communication apparatus comprises: the receiving unit receives indication information that is sent by the first PLMN and that is used to indicate that the dynamic roaming agreement between the first PLMN and the second PLMN is activated; and/or
the communication apparatus can access no PLMN whose priority is higher than that of the first PLMN

29. A computer-readable storage medium, wherein the readable storage medium stores computer-readable instructions, and when the instructions are executed, the method according to any one of claims 1 to 16 is implemented.

30. A communication apparatus, comprising a processor, wherein the processor is configured to run instructions stored in a memory, to perform the method according to any one of claims 1 to 16.
